(19) **Europäisches Patentamt / European Patent Office / Office européen des brevets**

(11) **EP 2 124 091 B1**

(12) **EUROPEAN PATENT SPECIFICATION**

(45) Date of publication and mention
of the grant of the patent:
**30.05.2012  Bulletin 2012/22**

(51) Int Cl.:
*G02F 1/133* (2006.01)     *G02F 1/1335* (2006.01)

(21) Application number: **09151616.1**

(22) Date of filing: **29.01.2009**

(54) **Liquid crystal display device**

Flüssigkristallanzeigevorrichtung

Dispositif d'affichage à cristaux liquides

(84) Designated Contracting States:
**DE GB NL**

(30) Priority: **21.05.2008  KR 20080047241**
**25.08.2008  US 197755**

(43) Date of publication of application:
**25.11.2009  Bulletin 2009/48**

(73) Proprietor: **Samsung Electronics Co., Ltd.**
**Suwon-si, Gyeonggi-do (KR)**

(72) Inventors:
• **Oh, Pil-yong**
**Gyeonggi-do (KR)**

• **Jung, Il-yong**
**Gyeonggi-do (KR)**

(74) Representative: **D'Halleweyn, Nele Veerle Trees**
**Gertrudis et al**
**Arnold & Siedsma**
**Sweelinckplein 1**
**2517 GK The Hague (NL)**

(56) References cited:
**EP-A2- 0 638 832      EP-A2- 1 253 459**
**JP-A- 2006 039 344    JP-A- 2007 065 137**
**US-A- 5 027 111**

## Description

The present invention relates to a liquid crystal display device according to the preamble of claim 1, and more particularly, to a liquid crystal display device to be installed outdoors.

EP 1 253 459 discloses a thermal management system for a thin depth LCD display enclosure comprising an LCD module, a backlight assembly and a thermal management system for convectively moving and dissipating heat.

JP2007065137 discloses a display device for a vehicle. The display device includes a liquid crystal display element 31 having a liquid crystal cell 31 a between a pair of polarization films 31 b and 31c, and light sources 32 for emitting light to the liquid crystal display element 31.

Generally, a liquid crystal display (LCD) device is a type of a flat panel display device, and includes a backlight unit emitting light and a liquid crystal panel selectively transmitting light from the backlight unit to form an image.

As liquid crystal panels have increased in size, demands and application areas for an LCD device having the large-sized liquid crystal panel have sharply increased.

If the LCD device is to be installed outdoors, the liquid crystal panel may be exposed to sunlight having $1kW/m^2$ radiant energy. In this case, liquid crystals are heated by solar radiant energy, and may not be driven normally. Thus, the successful outside installation of the LCD device is, in reality, unlikely without a sun blocking structure.

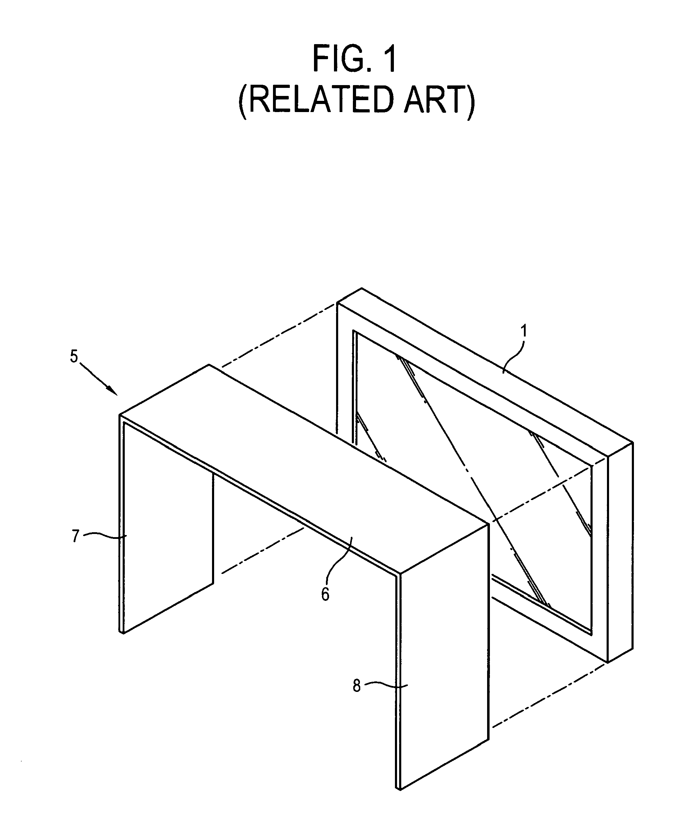

FIG. 1 is a perspective view illustrating an LCD device which is installed outdoors with a conventional light blocking plate.

As illustrated therein, the LCD device which can be installed outdoors includes a liquid crystal panel 1, and a light blocking plate 5 disposed in front of the liquid crystal panel 1 to prevent direct rays of light from being incident to the liquid crystal panel 1.

To block sunlight emitted from above and lateral sides, the light blocking plate 5 includes an upper plate 6 provided on the liquid crystal panel 1 and protruding forward, and left and right plates 7 and 8 provided at the left and right sides of the liquid crystal panel 1 and protruding forward.

If the LCD device which can be installed outdoors includes the light blocking plate 5 as described above, the direct rays of light is prevented from being incident to the liquid crystal panel 1.

However, the installed light blocking plate 5 narrows a viewing angle, and limits a viewing direction. Also, additional space is required to install the light blocking plate 5.

The liquid crystal display device of the invention is distinguished from the LCD device of EP1 253 459 by the features of the characterizing part of claim 1. There is provided a LCD device to block light not contributing to displaying images among solar radiant energy incident to a liquid crystal panel, without an outwardly-protruding light blocking plate, and to protect the liquid crystal panel from the solar radiant energy.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept can be achieved by providing a liquid crystal display device according to appended claim 1.

The first polarizing plate is provided at the outside surface of the first transparent substrate facing the backlight unit.

The liquid crystal display device comprises a second polarizing plate provided at the outside surface of the second transparent substrate.

The polarizing filter and the second polarizing plate are arranged so that the polarizing direction of light transmitting the polarizing filter is substantially equal to that of light transmitting the second polarizing plate.

The liquid crystal display device may further comprise an infrared filter provided in the open front end on the viewer side of the polarizing filter to block light in the infrared area among incident light, and an ultraviolet filter provided in the open front end on the viewer side of the infrared filter and to block light in the ultraviolet area among the incident light.

The liquid crystal display device comprises a heat radiating member provided in the housing to cool the liquid crystal panel and the polarizing filter.

The heating radiating member may comprise at least one fan which is provided in the housing to introduce external air to the housing or to discharge internal air from within the housing to the outside.

A first fan may be provided in a lower rear side of the housing to introduce the external air to a space between the liquid crystal panel and the polarizing filter.

A second fan may be provided in an upper rear side of the housing to discharge air from inside the housing to the outside.

The heat radiating member may comprise a heat absorber provided in the housing to absorb heat, and a heat radiator provided outside of the housing to discharge the heat absorbed by the heat absorber to the outside.

The distance D between the liquid crystal panel and the polarizing filter may satisfy the following formula:

$$0.005 \leq D/L \leq 0.1,$$

with

$$L = (H^2 + W^2)^{1/2}$$

Here, H refers to the height of the liquid crystal panel, W is the width of the liquid crystal panel, D is the distance D between the liquid crystal panel and the polarizing filter, and L is the diagonal length of the liquid crystal panel.

BRIEF DESCRIPTION OF THE DRAWINGS

The above and/or other aspects and utilities of the present general inventive concept will become apparent and more readily appreciated from the following description of the exemplary embodiments, taken in conjunction with the accompanying drawings, in which:

FIG. 1 is a perspective view illustrating a LCD device which is installed outdoors with a conventional light blocking plate;

FIG. 2 is a sectional view illustrating a LCD device according to an exemplary embodiment of the present general inventive concept;

FIG. 3 illustrates a detailed configuration of a liquid crystal panel in FIG. 2 and an external light blocking process of the LCD device in FIG. 2;

FIG. 4 illustrates a size of the liquid crystal panel and a distance between the liquid crystal panel and a polarizing filter; and

FIG. 5 is a sectional view of a LCD device according to another exemplary embodiment of the present general inventive concept.

DETAILED DESCRIPTION OF THE PREFERRED EMBODIMENTS

Reference will now be made in detail to embodiments of the present general inventive concept, examples of which are illustrated in the accompanying drawings, wherein like reference numerals refer to like elements throughout. The embodiments are described below so as to explain the present general inventive concept by referring to the figures.

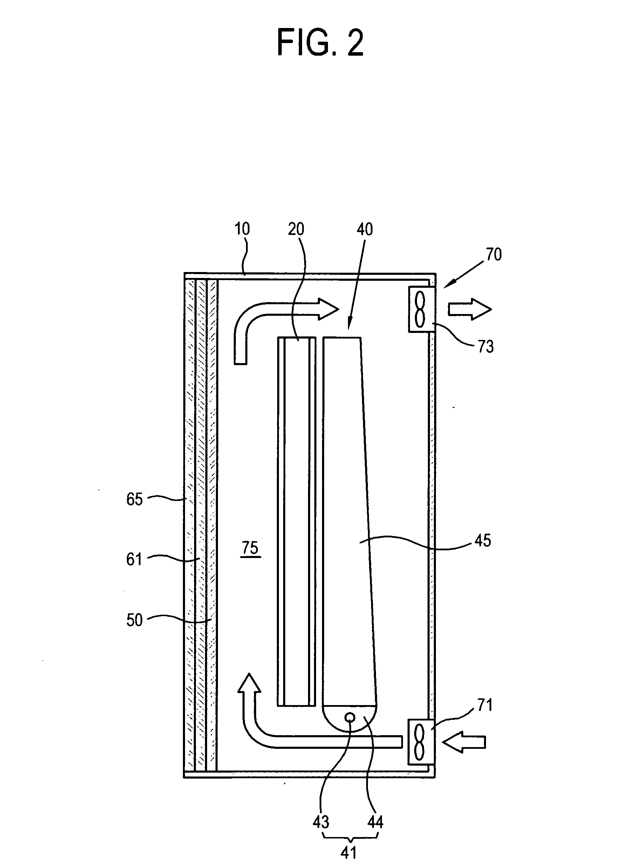

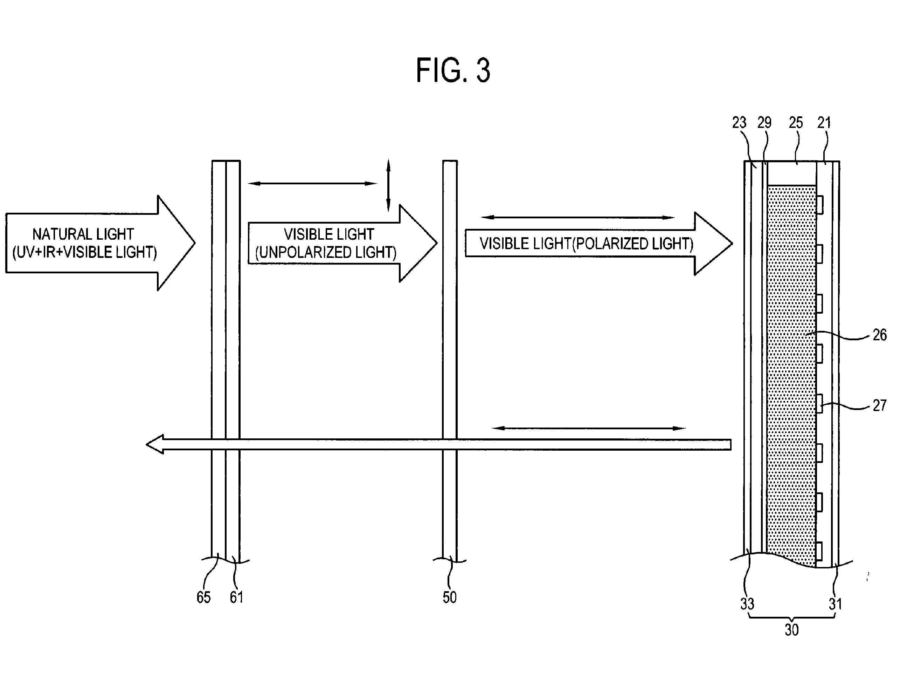

FIG. 2 is a sectional view illustrating a LCD device according to an exemplary embodiment of the present general inventive concept. FIG. 3 illustrates a detailed configuration of a liquid crystal panel in FIG. 2 and an external light blocking process of the LCD device in FIG. 2.

As illustrated therein, the LCD device according to the exemplary embodiment of the present general inventive concept includes a housing 10, and a liquid crystal panel 20, a backlight unit 40 and a polarizing filter 50 which are installed in the housing 10.

Referring to FIGS. 2 and 3, the liquid crystal panel 20 is a non-emitter type display panel. The liquid crystal panel 20 selectively transmits light emitted by the backlight unit 40 to each of a plurality of pixels forming an image. The liquid crystal panel 20 includes first and second transparent substrates 21 and 23, a sealing member 25, a liquid crystal 26, first and second transparent electrodes 27 and 29 and a polarizing plate 30.

The first and second transparent substrates 21 and 23 are spaced from each other at predetermined intervals. The liquid crystal 26 is injected between the first and second transparent substrates 21 and 23. The sealing member 25 seals an internal space formed between the first and second transparent substrates 21 and 23.

The first and second transparent electrodes 27 and 29 are stripe-shaped electrodes formed in the first and second transparent substrates 21 and 23, respectively. The first transparent electrode 27 intersects an alignment direction of the second transparent electrode 29. A switching element (not illustrated) is provided at an intersection of the first and second transparent electrodes 27 and 29 and controls power supplied to the first and second transparent electrodes 27 and 29 to turn on and off each pixel of the liquid crystal 26.

The polarizing plate 30 includes a first polarizing plate 31 provided in an external part of the first transparent substrate 21 and a second polarizing plate 33 provided in an external part of the second transparent substrate 23.

The first polarizing plate 31 transmits light in a predetermined polarizing direction. That is, the first polarizing plate 31 transmits specific polarized light emitted by the backlight unit 40 to the liquid crystal 26 and blocks other polarized light. The light which has passed through the first polarizing plate 31 progresses to the second polarizing plate 33, with a polarizing direction determined for each pixel depending on a driving status of the pixel.

The second polarizing plate 33 transmits light in a predetermined polarizing direction and blocks other polarized light. Thus, the liquid crystal panel 20 forms an image by blocking light which has passed through some pixels and by transmitting light which has passed through other pixels, corresponding to the driving status of the liquid crystal 26.

In this embodiment, the polarizing plate 30 includes the first polarizing plate 33 and the second polarizing plate 33, but not limited thereto.

The backlight unit 40 is installed in the housing 10, faces the first polarizing plate 31 and emits surface light to the liquid crystal panel 20.

According to the present embodiment, the backlight unit 40 is an edge emitting type, and includes a light source 41 and a light guiding plate 45 to guide a progress direction of the light emitted by the light source 41. The light source 41 includes a lamp 43 and a reflection mirror 44 to reflect light emitted by the lamp 43 to the light guiding plate 45. The light source 41 may include, for example, at least one light emitting diode (LED) disposed at an edge of the light guiding plate 45. The backlight unit 40 is not limited to the edge emitting type, and may include a direct emitting type.

The polarizing filter 50 is spaced from the liquid crystal panel 20 at predetermined intervals, and transmits predetermined polarized light of incident light and blocks other polarized light. Thus, if the LCD device is installed outdoors, a portion of sunlight incident from the outside is blocked. For example, in the present general inventive concept, approximately 50%, for example, may be blocked. Thus, the liquid crystal panel 20 is prevented from being thermal damaged by sunlight. As the polarizing filter 50 is spaced from the liquid crystal panel 20, light which is absorbed or reflected by the polarizing filter 50 to block sunlight is not directly applied to the liquid crystal panel 20.

To transmit an image formed by the liquid crystal panel 20, the polarizing filter 50 is disposed in consideration of the alignment direction of the second polarizing plate 33. That is, the polarizing filter 50 and the second polarizing plate 33 are arranged so that the polarizing direction of the light transmitting the polarizing filter 50 is substantially equal to that of light transmitting the second polarizing plate 33. As most of the image formed on the liquid crystal panel 20 transmits through the polarizing film 50, a lowering of brightness due to the polarizing filter 50 does not occur.

Here, the polarizing filter 50 transmits light polarized in a predetermined direction therethrough and blocks other polarized light, thereby serving as the second polarizing plate 33. Accordingly, the image can be formed without the second polarizing plate 33.

The LCD device according to the exemplary embodiment of the present general inventive concept may further include an infrared filter 61 and an ultraviolet filter 65 which are provided in the housing 10.

The infrared filter 61 is provided in a lateral side of the polarizing filter 50 and blocks light in the infrared area among incident light. The ultraviolet filter 65 is provided in a lateral side of the infrared filter 61 and blocks light in the ultraviolet area among the incident light.

If the LCD device further includes the infrared filter 61 and the ultraviolet filter 65, infrared rays (IR) and ultraviolet rays (UV) included in the solar radiant energy, i.e., approximately 50% of the solar radiant energy, is blocked.

Thus, about 50% of the incident solar radiant energy is blocked by the infrared filter 61 and the ultraviolet filter 65, and another 50% of the remaining solar radiant energy transmitting the infrared and ultraviolet filters 61 and 65 is blocked by the polarizing filter 50. As a result, only about 25% of the overall radiant energy passes through the filters 61, 65 and 50 and is incident to the liquid crystal panel 20, sharply reducing an impact of the solar radiant energy.

Even if the light blocking plate is not used, the liquid crystal 26 of the LCD device does not rise to a critical temperature.

The LCD device according to another embodiment may further include a heat radiating member 70 to cool the liquid crystal panel 20 and the polarizing filter 50.

The heat radiating member 70 may include at least one fan which is provided in the housing 10.

FIG. 2 illustrates first and second fans 71 and 73 as an example of the heat radiant member 70. Referring to FIG. 2, the first fan 71 is provided in a lower rear side of the housing 10 to introduce external air to a space 75 between the liquid crystal panel 20 and the polarizing filter 50. The second fan 73 is provided in an upper rear side of the housing 10 to discharge air from the housing 10 to the outside.

As described above, if the LCD device includes the first and second fans 71 and 73 as the heat radiating member 70, air circulates in and around the housing 10, and the liquid crystal panel 10 and the polarizing filter 50 may be more efficiently cooled. Since impurities may be introduced to the housing 10 when air circulates in and around the housing 10, an air filter (not illustrated) may be provided in an opening of the housing 10 having the first and second fans 71 and 73 to prevent the impurities.

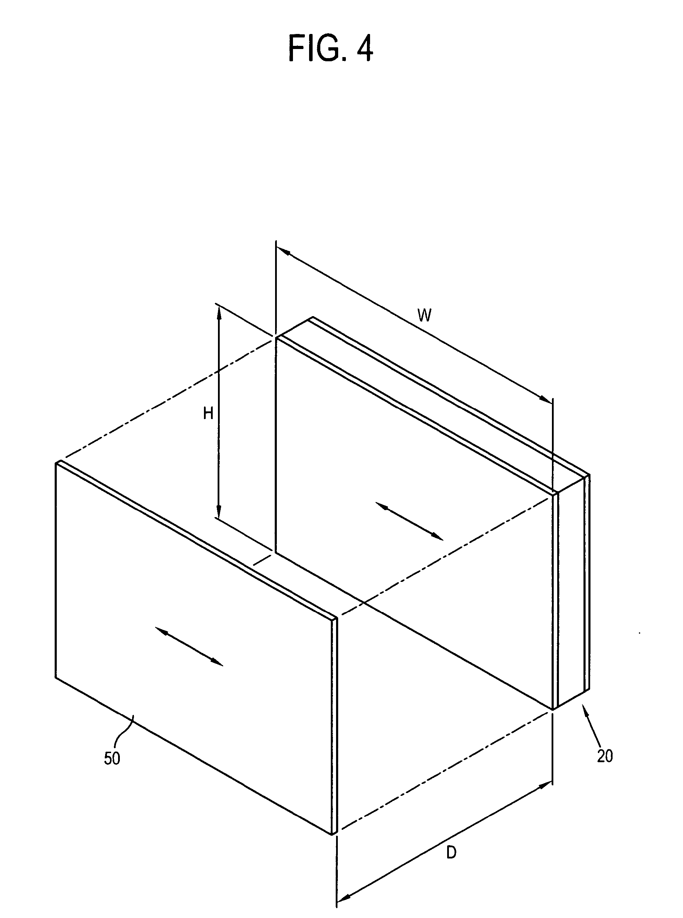

FIG. 4 illustrates a size of the liquid crystal panel 20 and a distance between the liquid crystal panel 20 and the polarizing filter 50.

Referring to FIG. 4, a distance D between the liquid crystal panel 20 and the polarizing filter 50 can be determined, for example, in consideration of a size of the liquid crystal panel 20. That is, if other conditions are equal, a larger liquid crystal panel receives more solar radiant energy. Then, the liquid crystal is very likely to be damaged. Considering such circumstances, the distance D can satisfy a following formula 1.

$$[\text{Formula 1}]$$
$$0.005 \leq D/L \leq 0.1$$
$$L = (H^2 + W^2)^{1/2}$$

Here, H refers to a height of the liquid crystal panel 20, W is a width of the liquid crystal panel 20, D is the distance D between the liquid crystal panel 20 and the polarizing filter 50, and L is a diagonal length of the liquid crystal panel 20.

In the formula 1, a lowest value is a value where boundary layers of air flow in the liquid crystal panel 20 and the polarizing filter 50 meet each other when the liquid crystal panel 20 and the polarizing filter 50 are cooled by the first and second fans 71 and 73. If D/L is out of the lowest value, air flow between the liquid crystal panel 20 and the polarizing filter 50 is fully developed. Thus, a convective heat transfer coefficient is drastically reduced.

In the formula 1, a highest value of D/L does not exist in the thermal aspect. If D/L is out of the highest value of the formula 1, a thickness of front and rear surfaces of the LCD device is very thick compared to a screen size, creating limitations in an installing space.

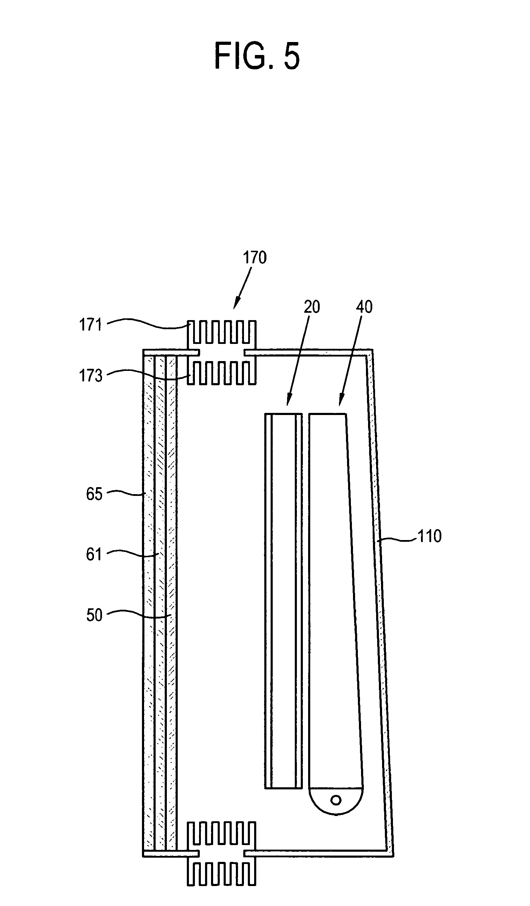

FIG. 5 is a sectional view illustrating a LCD device according to another exemplary embodiment of the present general inventive concept.

As illustrated therein, the LCD device according to the present embodiment includes a housing 110, and a liquid crystal panel 20, a backlight unit 40 and a polarizing filter 50 which are provided in the housing 110. The LCD device may further include an infrared filter 61, an ultraviolet filter 65 and a heat radiating member 170. The LCD device according to the present embodiment is differentiated from that according to the exemplary embodiment, illustrated in FIG. 2, in that the housing 110 is a closed configuration and a configuration of the heat radiating member 170 is changed.

As the housing 110 is a closed configuration, air does not circulate in and around the housing 110 unlike in the exemplary embodiment. Thus, external impurities are not introduced to the housing 110 fundamentally.

The heat radiating member 170 is provided in and outside of the housing 110. The heat radiating member 170 includes a heart absorber 171 which is provide in the housing 110 to absorb heat from an internal space of the housing 110, and a heat radiator 173 which is provided out of the housing 110 to discharge heat absorbed by the heat absorber 171 to the outside. The heat absorbed by the heat absorber 171 is applied to the heat radiator 173, and the heat radiator 173 discharges the heat to the outside of the housing 110. Thus, the inside of the housing 110 may be cooled.

FIG. 5 illustrates a heat sink having a plurality of heat radiating fins as an example of the heat radiating member 170, but not limited thereto. Alternatively, the heat radiating member 170 may include a heat pipe. As a configuration and an operation of the heat pipe is known, detailed description will be avoided.

As described above, the LCD device according to various embodiments of the present general inventive concept includes an additional polarizing filter spaced from a liquid crystal panel within a housing to block other light than predetermined polarized light of incident light. Thus, even if the LCD device is installed outside, direct emission of solar radiant energy to the liquid crystal panel may be eased. Even if installed outside, the liquid crystal panel of the LCD device may be prevented from being overheated.

The LCD device according to various embodiments of the present general inventive concept further includes an infrared filter and an ultraviolet filter as well as the polarizing filter to block light in the infrared area and the ultraviolet area included in solar radiant energy to protect the liquid crystal panel from the solar radiant energy more efficiently.

The LCD device according to various embodiments of the present general inventive concept further includes a heat radiating member to cool the liquid crystal panel and a polarizing filter in a housing. As internal temperature of the housing is lowered, internal temperature of the housing may be prevented from rising.

Since the LCD device according to various embodiments of the present general inventive concept does not use a liquid blocking plate protruding outwardly, a wide viewing angle may be secured and limitation of an installing space may be reduced.

Although various exemplary embodiments of the present general inventive concept have been illustrated and described, it will be appreciated by those skilled in the art that changes may be made in these embodiments without departing from the scope of the appended claims.

**Claims**

1. A liquid crystal display device, comprising:

   a housing (10, 10) having an open front end and an inner surface;
   a liquid crystal panel (20) provided inside the housing and comprising first and second transparent substrates (21, 23) spaced from each other at a predetermined interval, a sealing member (25) sealing an internal space formed between the first and second transparent substrates, a liquid crystal (26) filling the internal space, first and second transparent electrodes (27, 29) formed in the first and second transparent substrates, respectively, and first and second polarizing plates (31, 33) each arranged to transmit light in a respective predetermined polarization direction;
   a backlight unit (40) disposed in the housing to emit surface light to the liquid crystal panel;
   a heat radiating member provided in the housing to cool the liquid crystal panel ; wherein the first polarizing plate (31) is provided at the outside surface of the first transparent substrate (21) facing the backlight unit (40); and wherein the second polarizing plate (33) is provided at the outside surface of the second transparent substrate (23);
   **characterized in that** the liquid crystal display device further comprises:
   a polarizing filter (50) disposed in the open front end of the housing in contact with the inner surface and spaced from the liquid crystal panel at a predetermined interval to be cooled by the heat radiating member and to transmit predetermined polarized light and to block other polarized light of incident light;
   wherein the polarizing filter (50) and the second polarizing plate (33) are arranged so that the polarization direction of light transmitted by the polarizing filter is equal to that of light transmitted by the second polarizing plate

2. The liquid crystal display device according to claim 1, further comprising:

an infrared filter (61) provided in the open front end on the viewer side of the polarizing filter to block light in the infrared area among incident light; and

an ultraviolet filter (65) provided in the open front end on the viewer side of the infrared filter to block light in the ultraviolet area among the incident light.

3. The liquid crystal display device according to claim 1 or 2, wherein the heating radiating member comprises:

at least one fan (71, 73) provided in the housing to introduce external air to the housing or to discharge internal air from within the housing to the outside.

4. The liquid crystal display device according to claim 3, wherein a first fan (71) of said at least one fan is provided in a lower rear side of the housing to introduce the external air to a space between the liquid crystal panel and the polarizing filter.

5. The liquid crystal display device according to claim 3, wherein a second fan (73) of said at least one fan is provided in an upper rear side of the housing to discharge air from inside the housing to the outside.

6. The liquid crystal display device according to claim 1 or 2, wherein the heat radiating member comprises:

a heat absorber provided in the housing to absorb heat; and

a heat radiator provided outside of the housing to discharge the heat absorbed by the heat absorber to the outside.

7. The liquid crystal display device according to any one of claims 1 through 6, wherein the distance D between the liquid crystal panel and the polarizing filter satisfies the following formula:

$$0.005 \leq D/L \leq 0.1$$

, with $L = (H^2 + W^2)^{1/2}$,
wherein H refers to the height of the liquid crystal panel, W is the width of the liquid crystal panel, and L is the diagonal length of the liquid crystal panel.

**Patentansprüche**

1. Flüssigkristallanzeigevorrichtung, umfassend:

ein Gehäuse (10, 110) mit einem offenen vorderen Ende und einer Innenfläche;
eine Flüssigkristalltafel (20), vorgesehen im Innern des Gehäuses und umfassend ein erstes und ein zweites transparentes Substrat (21, 23), die voneinander mit einem vorgegebenen Zwischenraum beabstandet sind, ein Dichtteil (25), das einen Innenraum dichtet, der zwischen dem ersten und dem zweiten transparenten Substrat ausgebildet ist, einen Flüssigkristall (26), der den Innenraum füllt, eine erste und eine zweite transparente Elektrode (27, 29), die in jeweils dem ersten und dem zweiten transparenten Substrat ausgebildet sind, und eine erste und eine zweite Polarisationsplatte (31, 33), die jeweils angeordnet sind, um Licht in eine jeweilige vorgegebene Polarisationsrichtung zu transmittieren;
eine Hintergrundbeleuchtungseinheit (40), die im Gehäuse eingerichtet ist, um Flächenlicht zur Flüssigkristalltafel auszusenden;
ein Wärmeabstrahlungsteil, das im Gehäuse vorgesehen ist, um die Flüssigkristalltafel zu kühlen, wobei die erste Polarisationsplatte (31) an der Außenfläche des ersten transparenten Substrats (21) vorgesehen ist, die der Hintergrundbeleuchtungseinheit (40) zugewandt ist; und wobei die zweite Polarisationsplatte (33) an der Außenfläche des zweiten transparenten Substrats (23) vorgesehen ist;
**dadurch gekennzeichnet, dass** die Flüssigkristallanzeigevorrichtung weiterhin umfasst:
einen Polarisationsfilter (50), der im offenen vorderen Ende des Gehäuses in Kontakt mit der Innenfläche eingerichtet ist und von der Flüssigkristalltafel mit einem vorgegebenen Zwischenraum beabstandet ist, um durch das Wärmeabstrahlungsteil gekühlt zu werden und um vorgegebenes polarisiertes Licht zu transmittieren und um anderes polarisiertes Licht von einfallendem Licht zu sperren; wobei der Polarisationsfilter (50) und die zweite Polarisationsplatte (33) so angeordnet sind, dass die Polarisationsrichtung von Licht, das vom Polarisationsfilter transmittiert wird, gleich jener von Licht ist, das von der zweiten Polarisationsplatte transmittiert wird.

2. Flüssigkristallanzeigevorrichtung nach Anspruch 1, weiterhin umfassend:

einen Infrarotfilter (61), der im offenen vorderen Ende auf der Zuschauerseite des Polarisationsfilters vorgesehen ist, um Licht im Infrarotbereich inmitten einfallenden Lichts zu sperren; und
einen Ultraviolettfilter (65), der im offenen vorderen Ende auf der Zuschauerseite des Infrarotfilters vorgesehen ist, um Licht im Ultraviolettbereich inmitten des einfallenden Lichts zu sperren.

3. Flüssigkristallanzeigevorrichtung nach Anspruch 1 oder 2, wobei das Wärmeabstrahlungsteil umfasst:

   zumindest einen Lüfter (71, 73), der im Gehäuse vorgesehen ist, um dem Gehäuse Außenluft zuzuführen oder um Innenluft vom Innern des Gehäuses nach außen abzuführen.

4. Flüssigkristallanzeigevorrichtung nach Anspruch 3, wobei ein erster Lüfter (71) vom zumindest einen Lüfter in einer unteren rückwärtigen Seite des Gehäuses vorgesehen ist, um die Außenluft einem Raum zwischen der Flüssigkristalltafel und dem Polarisationsfilter zuzuführen.

5. Flüssigkristallanzeigevorrichtung nach Anspruch 3, wobei ein zweiter Lüfter (73) vom zumindest einen Lüfter in einer oberen rückwärtigen Seite des Gehäuses vorgesehen ist, um Luft vom Innern des Gehäuses nach außen abzuführen.

6. Flüssigkristallanzeigevorrichtung nach Anspruch 1 oder 2, wobei das Wärmeabstrahlungsteil umfasst:

   einen Wärmeabsorber, der im Gehäuse vorgesehen ist, um Wärme zu absorbieren; und einen Wärmeabstrahler, der außerhalb des Gehäuses vorgesehen ist, um die vom Wärmeabsorber absorbierte Wärme nach außen abzuführen.

7. Flüssigkristallanzeigevorrichtung nach einem der Ansprüche 1 bis 6, wobei der Abstand D zwischen der Flüssigkristalltafel und dem Polarisationsfilter die folgende Formel erfüllt:

$$0,005 \leq D/L \leq 0,1,$$

mit $L = (H^2 + W^2)^{1/2}$,
worin H sich auf die Höhe der Flüssigkristalltafel bezieht, W für die Breite der Flüssigkristalltafel steht und L für die Diagonalenlänge der Flüssigkristalltafel steht.

**Revendications**

1. Dispositif d'affichage à cristaux liquides, comprenant :

   une enveloppe (10, 110) possédant une extrémité avant ouverte et une surface intérieure ;

un écran à cristaux liquides (20) prévu à l'intérieur de l'enveloppe et comprenant des premier et second substrats transparents (21, 23) espacés l'un de l'autre selon un écart prédéterminé, un élément d'hermétisation (25) assurant l'étanchéité d'un espace interne formé entre le premier et

le second substrat transparent, un cristal liquide (26) remplissant l'espace interne, des première et seconde électrodes transparentes (27, 29) formées dans les premier et second substrats transparents, respectivement, et des première et seconde plaques polarisantes (31, 33) agencées chacune de manière à transmettre de la lumière dans une direction de polarisation prédéterminée respective ;
une unité de rétroéclairage (40) disposée dans l'enveloppe pour émettre de la lumière superficielle vers l'écran à cristaux liquides ;
un élément de radiation thermique prévu dans l'enveloppe pour refroidir l'écran à cristaux liquides, dans lequel la première plaque polarisante (31) est prévue sur la surface extérieure du premier substrat transparent (21) en faisant face à l'unité de rétroéclairage (40) ; et dans lequel la seconde plaque polarisante (33) est prévue sur la surface extérieure du second substrat transparent (23) ;
**caractérisé en ce que** le dispositif d'affichage à cristaux liquides comprend en outre :
un filtre polarisateur (50) disposé dans l'extrémité avant ouverte de l'enveloppe en contact avec la surface intérieure et écarté de l'écran à cristaux liquides selon un écart prédéterminé pour être refroidi par l'élément de radiation thermique et pour transmettre de la lumière polarisée et
pour bloquer toute autre lumière polarisée de la lumière incidente ;
dans lequel le filtre polarisateur (50) et la seconde plaque polarisante (33) sont agencés de manière que la direction de polarisation de la lumière transmise par le filtre polarisateur corresponde à celle de la lumière transmise par la seconde plaque polarisante.

2. Dispositif d'affichage à cristaux liquides selon la revendication 1, comprenant en outre :

   un filtre infrarouge (61) prévu dans l'extrémité avant ouverte, du côté spectateur du filtre polarisateur pour bloquer la lumière dans la gamme infrarouge dans la lumière incidente ; et
   un filtre ultraviolet (65) prévu dans l'extrémité avant ouverte, du côté spectateur du filtre infrarouge pour bloquer la lumière dans la gamme ultraviolette dans la lumière incidente.

3.  Dispositif d'affichage à cristaux liquides selon la revendication 1 ou 2, dans lequel l'élément de radiation thermique comprend :

    au moins un ventilateur (71, 73) prévu dans l'enveloppe pour introduire de l'air externe dans l'enveloppe ou pour évacuer l'air interne de l'intérieur de l'enveloppe vers l'extérieur.

4.  Dispositif d'affichage à cristaux liquides selon la revendication 3, dans lequel un premier ventilateur (71) desdits au moins un ventilateurs est prévu d'un côté arrière inférieur de l'enveloppe pour introduire l'air externe dans un espace situé entre l'écran à cristaux liquides et le filtre polarisateur.

5.  Dispositif d'affichage à cristaux liquides selon la revendication 3, dans lequel un second ventilateur (73) dudit au moins un ventilateur est prévu d'un côté arrière supérieur de l'enveloppe pour évacuer de l'air de l'intérieur de l'enveloppe vers l'extérieur.

6.  Dispositif d'affichage à cristaux liquides selon la revendication 1 ou 2, dans lequel l'élément de radiation thermique comprend :

    un absorbeur de chaleur prévu dans l'enveloppe pour absorber de la chaleur ; et
    un radiateur prévu à l'extérieur de l'enveloppe pour évacuer la chaleur absorbée par l'absorbeur de chaleur vers l'extérieur.

7.  Dispositif d'affichage à cristaux liquides selon l'une quelconque des revendications 1 à 6, dans lequel la distance D entre l'écran à cristaux liquides et le filtre polarisateur satisfait la formule suivante :

$$0,005 \ \leq \ D/L \ \leq \ 0,1$$

dans laquelle $L = (H^2 + W^2)^{1/2}$,
où H désigne la hauteur de l'écran à cristaux liquides,
W la largeur de l'écran à cristaux liquides et L la longueur de la diagonale de l'écran à cristaux liquides.

# FIG. 1
# (RELATED ART)

# FIG. 2

# FIG. 3

VISIBLE LIGHT(POLARIZED LIGHT)

VISIBLE LIGHT (UNPOLARIZED LIGHT)

NATURAL LIGHT (UV+IR+VISIBLE LIGHT)

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1253459 A

- JP 2007065137 B